# EUROPEAN PATENT APPLICATION

(11) **EP 0 605 223 A1**
(43) Date of publication of application: **06.07.1994**
(21) Application number: 93310524.9
(22) Date of filing: 23.12.1993
(51) Int. Cl.: F16J 9/26

(54) **Gas nitrided piston ring**

(30) Priority: 29.12.1992 US 997842
(71) Applicant: DANA CORPORATION, Toledo, OH 43615 (US)
(72) Inventor: Hite, Russell E., Richmond, Indiana 47374 (US)
(74) Representative: Cheyne, John Robert Alexander Mackenzie

(57) **Abstract**

A base body 26 of a piston ring 20 has a gas nitrided layer 28 formed on its outer peripheral face 24. A metallic nitride, such as chromium nitride, face coating 30 is then formed on the gas nitrided layer 28. The gas nitrided layer 28 acts as a very hard substrate which prevents chipping of the chromium nitride face coating 30. Damage to the chromium nitride face coating 30 is also minimized because of the increased bond strength between the two layers. The face coating 30 has a high density, low coefficient of friction, high hardness and correspondingly high scuff resistance. The invention also incorporates a preferred method of applying the face coating wherein the gas nitrided layer 28 is lapped and polished to remove surface irregularities.

## Description

### BACKGROUND OF THE INVENTION

The present invention relates to a piston ring, and more particularly to a gas nitrided ring having a chromium nitride coating with superior wear and scuff resistance as well as a reduced coefficient of friction.

It is known to form a gas nitrided layer on a piston ring as a base for a nickel-boron face coating. It is also known to form a gas nitrided layer on a piston ring as a base for a titanium nitride face coating. The nickel-boron and titanium nitride face coatings complement the hard gas nitrided layer by providing features not possessed by the gas nitrided layer, such as scuff resistance.

There are several problems with piston rings having such face coatings. While they have a high resistance to scuffing and are thus desirable, such coatings are particularly prone to chipping. Further, there is a problem with achieving a sufficient coating thickness. Also, there is often increased friction between the face coating and a mating mechanical element such as a cylinder wall.

It is also known to use a chromium nitride coating on a piston ring. Chromium nitride and gas nitrided layers are typically seen as equivalent and have never been used in combination.

### SUMMARY OF THE INVENTION

A base body of a disclosed piston ring has a gas nitrided layer formed on at least an outer peripheral face of an outer surface with a chromium nitride face coating then formed on the gas nitrided layer. Gas nitrided layers and chromium nitride face coatings have traditionally been seen as alternate wear resistance materials. They are both known as being quite hard independently of each other. Thus, the complementary features that may be known from the prior art combination of gas nitrided layers and titanium nitride or nickel boron would not apply to a gas nitrided layer with a chromium nitride coating. The combination of the two provides unexpected benefits in increasing the life of the chromium nitride coating. The gas nitrided layer provides a very hard substrate, limiting chipping of the face coating.

In a method according to the present invention, the gas nitrided layer is preferably formed by placing the base body in an ammonia-nitrogen atmosphere furnace. Surface irregularities are then removed from the base body. Finally, a metallic nitride is plated to the gas nitrided layer preferably using a low voltage high amperage vacuum arc plating process.

### BRIEF DESCRIPTION OF THE DRAWINGS

The inventive aspects of the present invention will become more apparent upon reading the following detailed description, claims, and drawings, of which the following is a brief description:

Figure 1 is a perspective view of a piston ring incorporating the present invention.

Figure 2 is a cross-sectional view of the piston ring shown in Figure 1.

Figure 3A is a cross-sectional view of a piston ring base body in a first step of making a piston ring according to the present invention.

Figure 3B is a cross-sectional view of an intermediate step of making a piston ring according to the present invention.

Figure 3C is a cross-sectional view of a completed piston ring incorporating the present invention.

### DESCRIPTION OF A DETAILED EMBODIMENT

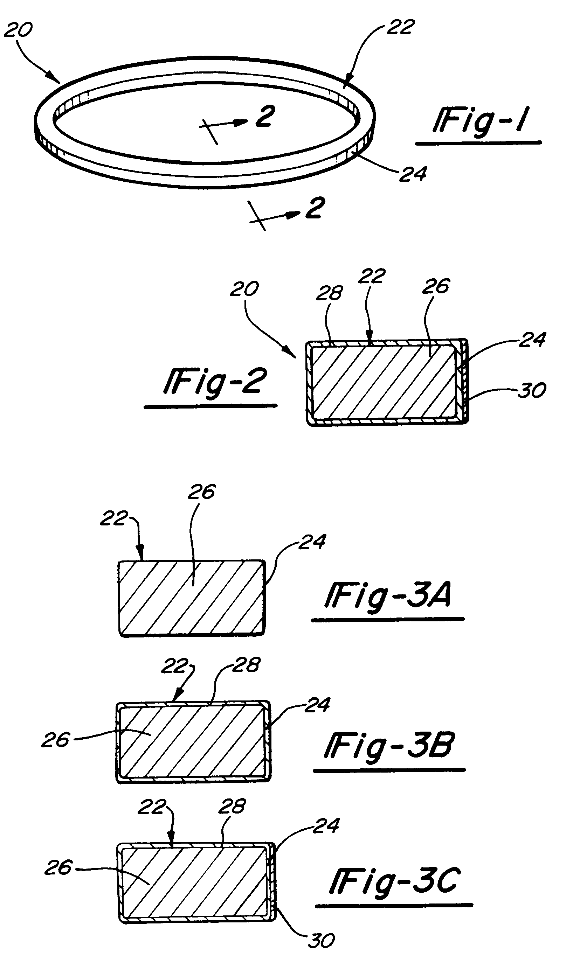

A piston ring 20 is shown in Figure 1 having an outer surface 22 which includes an outer peripheral face 24. In use, outer peripheral face 24 contacts an inner wall of a cylinder.

As illustrated in Figure 2, piston ring 20 includes a base body 26 formed from a martensic grade stainless steel having between 10 and 20 percent chromium by weight and between 0.20 and 0.90 percent carbon by weight. A gas nitrided layer 28 is formed on outer surface 22, including along outer peripheral face 24. In a preferred embodiment, the case depth of gas nitrided layer 28 is at least 0.002 inches (50 µm). A metallic nitride face coating 30 is then formed on the gas nitrided layer 28. Preferably, the metallic nitride face coating 30 is only formed at outer peripheral face 24. The metallic nitride coating 30 should have a thickness of at least 0.001 inches (25 µm) and preferably a thickness of 0.002 inches (50 µm).

Metallic nitride face coatings are desirable for use in piston rings. However, such coatings are particularly prone to chipping. The use of gas nitrided layer 28 as a base for chromium nitride face coating 30 provides unexpected benefits. The gas nitrided layer 28 acts as a very hard substrate to prevent chipping of the metallic nitride face coating 30.

A preferred metallic nitride coating is chromium nitride which has a high bond strength to gas nitrided layer 28 resulting from the method of coating formation, described below. The chromium nitride coating 30 preferably has no porosity, a low coefficient of friction, high hardness and strong scuff resistance. Thus, combining a gas nitrided layer with the chromium nitride face coating provides unexpected improved wear resistance, particularly along the outer peripheral face, where it is most needed. The chromium nitride face coating has low internal stress, which aids in resisting chipping and allows greater coating thickness. Further, chromium nitride has good compatibility with cast iron, which is particularly important for a piston ring within an internal combustion engine. As a result, there is lower abrasion.

As shown in Figure 3A, piston ring 20 is formed by starting with base body 26. A gas nitrided layer 28 is then formed on at least outer peripheral face 24 as illustrated in Figure 3B. In practice however, the gas nitrided layer is formed about the entirety of outer surface 22 by placing body 26 in an ammonia-nitrogen atmosphere furnace operating between 930 and 1050 °F (499 and 566 °C).

Once gas nitrided layer 28 is complete, surface irregularities are removed by lapping and polishing. Lapping is a process involving the use of a metal lap which is run over the relevant surface. For gas nitrided layer 28 to provide an optimum substrate, the surface must be extremely smooth. In practice, a peak to valley roughness average ("Ra") of at most 2 to 4 µm is preferable. Further, the gas nitrided layer is preferably maintained at its original hardness when the metallic nitride coating is applied.

As shown in Figure 3C, a metallic nitride, which is preferably chromium nitride, is plated to the gas nitrided layer 28 to form face coating 30. In general, a metallic source such as chromium is evaporated to produce a metallic vapor in a zone between the metallic source and gas nitrided layer 28. Then a nitrogen containing gas is introduced into the zone. The gas reacts with the metallic vapor to form a metallic nitride with metallurgically tight bonds which is then deposited onto layer 28 to create the metallic nitride face coating 30. Metallic nitride face coating 30 has no porosity, and none of the interstitial spaces present with a plasma applied face coating.

More specifically, face coating 30 may be applied through the use of an electroplating process called "Arc Physical Vapor Deposition". The gas nitrided layered body 26 is placed in a vacuum furnace. Polarity is established between a plating metal such as chromium and base body 26. Base body 26 acts as a negatively charged cathode and the plating metal acts as a positively charged anode. The vaporized plating metal interacts with a reactive gas containing nitrogen to form a metallic nitride which is then deposited onto layer 28. Chromium has been found to be a particularly good plating metal since its use results in a metallic nitride coating of the desired thickness. In practice, approximately 10 µm of face coating 30 may be produced an hour. Vapor deposition using this approach requires approximately 100 amps using a voltage differential of approximately 20 volts.

A preferred embodiment of the present invention has been described. It is to be understood that variations and modifications may be employed without departing from the scope of the present invention. Accordingly, the following claims should be studied to determine the true scope of the present invention. In particular, metallic nitrides other than chromium nitride may be suitable for the purposes of the present invention. The nitrides of the transition metals of groups IVB - VIB are suitable, and particularly those of groups IVA, VA, VIA and VIIA, and most particularly group VIA (which comprises chromium, molybdenum and tungsten).

The metallic nitride preferably has a high density (preferably greater than 5 g/cc³, and most preferably greater than 6 g/cc³), and preferably has a hardness (Knoop Microhardness) greater than 1000.

## Claims

1. A piston ring comprising:
a generally annular base body having an outer surface including an outer peripheral face;
a gas nitrided layer at least on said outer peripheral face of said body; and
a chromium nitride face coating on said gas nitrided layer at least at said outer peripheral face.

2. A piston ring as recited in claim 1, wherein said gas nitrided layer covers the entirety of said outer surface of said body.

3. A piston ring as recited in claim 2, wherein said face coating is formed on said gas nitrided layer only at said outer peripheral face of said base body.

4. A piston ring as recited in claim 1, wherein said gas nitrided layer has a minimum case depth of 0.002 inches (50 µm).

5. A piston ring as recited in claim 4, wherein said face coating has a thickness of at least 0.001 inches (25 µm).

6. A method for forming a coated piston ring comprising the steps of:
(A) forming a piston ring base body with an outer surface including an outer peripheral face;
(B) forming a gas nitrided layer on said outer face of said body;
(C) machining said gas nitrided layer to reduce surface irregularities; and
(D) plating a metallic nitride to said gas nitrided layer.

7. A method as recited in claim 6, further including the step of maintaining said gas nitrided layer at its initial hardness during steps (C) and (D).

8. A method as recited in claim 6, wherein said gas nitrided layer has a roughness average of at most 2 to 4 µm after step (C).

9. A method as recited in claim 6, wherein said metallic nitride is plated to said gas nitrided layer only at an outer peripheral face of said body.

10. A method as recited in claim 6, wherein step (C) includes the substeps of lapping and polishing the gas nitrided layer.

11. A method as recited in claim 6, wherein said metallic nitride is chromium nitride.

12. A method as recited in claim 6, wherein step (D) comprises the substeps of:
(i) evaporating a source of a metal to produce a metallic vapor in a zone between said source and said gas nitrided layer;
(ii) introducing a nitrogen containing gas into said zone;
(iii) reacting said metallic vapor and said nitrogen containing gas to form said metallic nitride; and
(iv) depositing said metallic nitride onto said gas nitrided layer to form a face coating.

13. A method as recited in claim 6, wherein step (D) utilizes a vacuum arc plating process.
